# EUROPÄISCHE PATENTSCHRIFT

(11) **EP 2 160 823 B1**
(45) Veröffentlichungstag und Bekanntmachung des Hinweises auf die Patenterteilung: **02.11.2016**
(21) Anmeldenummer: 08784522.8
(22) Anmeldetag: 19.06.2008
(51) Int. Cl.: H02M 1/42

(54) **LEISTUNGSFAKTOR-KORREKTURSCHALTUNG FÜR EIN ELEKTRONISCHES VORSCHALTGERÄT FÜR EIN LEUCHTMITTEL**
POWER FACTOR CORRECTION CIRCUIT FOR AN ELECTRONIC FLUORESCENT LAMP BALLAST
CIRCUIT DE CORRECTION DE FACTEUR DE PUISSANCE POUR UN BALLAST ÉLECTRONIQUE DE LUMINAIRE

(30) Priorität: 22.06.2007 DE 102007028785
(43) Veröffentlichungstag der Anmeldung: 10.03.2010
(73) Patentinhaber: Tridonic GmbH & Co KG, 6851 Dornbirn (AT)
(72) Erfinder: BÖCKLE, Reinhard, A-6841 Mäder (AT); FINK, Jürgen, A-6911 Lochau (AT)
(74) Vertreter: Rupp, Christian
(86) Internationale Anmeldenummer: PCT/EP2008/004962
(87) Internationale Veröffentlichungsnummer: WO 2009/000465

(56) Entgegenhaltungen:
- EP-A- 0 504 094
- EP-A1- 0 730 393
- WO-A-89/11691
- FR-A- 2 852 463
- JP-A- H11 312 592
- JP-A- 2003 199 345
- US-A- 5 134 355
- US-A- 5 602 463
- US-A1- 2005 213 353
- US-B1- 6 278 245
- US-B1- 6 924 630

## Beschreibung

Die Erfindung betrifft ein elektronisches Vorschaltgerät für ein Leuchtmittel, aufweisend eine aktiv von enienr Steuereinheit getaktete Leistungsfaktor-Korrekturschaltung (Power Factor Controller, abgekürzt "PFC").

Bei nicht-linearen Verbrauchern, wie es beispielsweise Gleichrichter mit nachfolgender Glättung in Netzteilen sind, werden die Eingangsströme trotz der sinusförmigen Eingangsspannung gegenüber letzterer in ihrer Phase verschoben und nicht-sinusförmig verzerrt. Derartige Eingangsströme setzen sich aus einer Summe höherfrequenter Anteile zusammen, also solchen mit Oberschwingungen, die in den Stromversorgungsnetzen und anderen elektrischen Geräten Störungen verursachen können. Dem kann durch eine Leistungsfaktorkorrektur entgegengewirkt werden, die die nicht-lineare Stromaufnahme behebt und die Eingangsströme so formt, dass sie im Wesentlichen sinusförmig sind. Die Leistfaktorkorrektur erfolgt durch eine Leistungsfaktor-Korrekturschaltung, die in entsprechenden Geräten vorgeschaltet werden. Der weit verbreitete englischsprachige Begriff für aktive (getaktete) Leistungsfaktor-Korrekturschaltungen ist Power Factor Controller, oder kurz PFC.

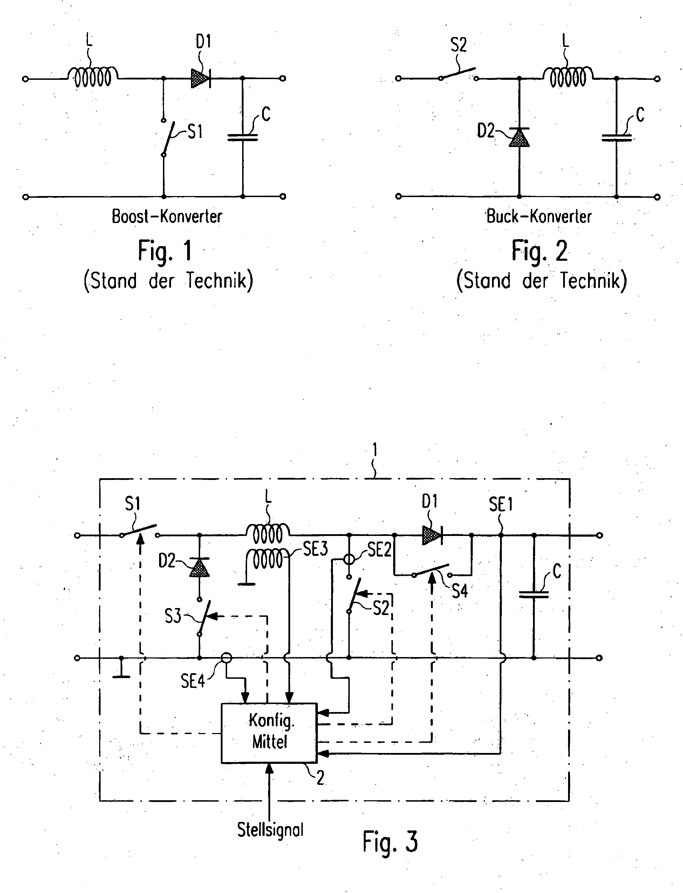

Als PFCs werden bspw. sogenannten Boost-Konverter oder Buck-Konverter eingesetzt. Ein bekannter Boost-Konverter ist in Fig. 1 gezeigt. Ein bekannter Buck-Konverter ist in Fig. 2 gezeigt. Sie unterscheiden sich im Wesentlichen dadurch, dass bei dem Boost-Konverter die Ausgangsspannung höher als die Eingangsspannung ist, während sie bei dem Buck-Konverter niedriger als die Eingangsspannung ist. Eine etwas genauere Beschreibung des Aufbaus und der Funktion dieser beiden Konverter-Typen folgt später.

Mit Netzspannung betriebene elektronische Vorschaltgeräte für Leuchtmittel enthalten einen Gleichrichter und daran anschließend einen Wechselrichter, mit dem das Leuchtmittel betrieben wird. Derartige Vorschaltgeräte sind zwangsläufig nicht-linear. Ebenfalls nicht-linear ist die Kennlinie des Leuchtmittels, jedenfalls dann, wenn es sich um eine Gasentladungslampe, insbesondere eine Leuchtstofflampe handelt. Demnach bietet sich der Einsatz von PFCs auch für elektronische Vorschaltgeräte an, insbesondere weil die Rücksendung von Oberwellen ins Netz bei der Stromaufnahme durch Normen geregelt ist.

Elektronische Vorschaltgeräte (EVGs) müssen in Abhängigkeit von den durch sie zu versorgenden Leuchtmitteln, insbesondere von deren Spannungsbedarf, unterschiedlich ausgelegt werden. Dabei kann die Wahl des vorzuschaltenden PFCs hilfreich sein.

Eine flexible PFC-Schaltung mit einstellbaren Betriebsarten wird in US 2005213353 beschrieben.

Der Erfindung liegt daher die Aufgabe zugrunde, ein EVG mit einem PFC zur Verfügung zustellen, das zur Anpassung an unterschiedliche Einsatzzwecke variierbar ist. Er soll insbesondere abhängig vom Lastzustand oder Zustand der Versorgungsspannung oder des Versorgungsstroms seine Arbeitsweise ändern bzw. anpassen können.

Die Aufgabe wird durch die Merkmale des Anspruchs 1 gelöst. Gemäß einer vorteilhaften Ausführung weist ein EVG Konfigurationsmittel auf, die eine Konfiguration des PFCs erlauben, derart, dass er im
(a) Buck-Betrieb, oder im
(b)Boost-Betrieb
   betrieben werden kann. Möglich sein soll auch ein Wechsel zwischen beiden Betriebsarten, und insoweit ein gemischter Betrieb.
   Die Kombination aus einem Boost-Konverter und einem Buck-Konverter als Buck-Boost-PFC ist bekannt, beispielsweise nach der US 2006/0255776A1, der Veröffentlichung von Gerd K. Anders und Fredl Blaabjerg mit dem Titel "Current Programmed Control of a Single-Face Two-Switch Buck-Boost Power Factor Correction Circuit" in IEEE Transactions on Industries Electronics, Vol. 53, No. 1, Feb. 2006 und der Veröffentlichung von Jingquan Chen, Dragan Maksimovic und Robert W. Erickson mit dem Titel "Analysis and Design of Low-Stress Buck-Boost-Converter in Universal-Input PFC Applications" in IEEE Transactions on Power Electronics, Vol. 21, No. 2, März 2006.
   Der Buck-Konverter und der Boost-Konverter werden in diesen Veröffentlichungen gemeinsam betrieben. Demgegenüber soll der erfindungsgemäße PFC wahlweise in eine der beiden Betriebsarten schaltbar sein, um somit einen alternativen Betrieb ermöglichen, also entweder den Boost-Betrieb oder den Buck-Betrieb.
   Die Anpassungsfähigkeit des PFCs in dem EVG beschränkt sich gemäss einem zu dem erstgenannten Aspekt zusätzlichen oder alternativen Aspekt der Erfindung darauf, den PFC wahlweise im
c) Betrieb mit kontinuierlichem Strom (continuous conduction mode) oder
d) Betrieb mit diskontinuierlichem Strom (discontinuous conduction mode) oder
e) Betrieb im Grenzbereich zwischen kontinuierlichem und diskontinuierlichem Strom (critical conduction mode oder Borderline-Betrieb)
   zu betreiben.
   Die einzelnen Betriebsarten sowie ihre Vor- und Nachteile sind beschrieben in der Veröffentlichung von L. Rosetti, G. Spiazzi und P. Tenti ,Control techniques for power factor correction converters' Proc. of PEMC 94, Warsaw, Poland pp. 1310-1318, 1994.
   Die vorstehend genannten Betriebsarten eröffnen zusätzliche Möglichkeiten, unterschiedliche Messpunkte, wie Drosselstrom, Stromnulldurchgang an der Drossel, Ausgangsspannung sowie unterschiedliche Regelschleifen zu nutzen.
   Eine andere Weiterbildung betreffend die Anpassungsfähigkeit des PFCs kann darin bestehen, dass die durch die Konfigurierungsmittel bewirkte Konfiguration des PFCs in Abhängigkeit von
f) der Versorgungsspannung für AC-Betrieb oder DC-Betrieb oder
g) der erkannten Last am Ausgang oder
h) der Eingangsspannung, und/oder
i) dem Dimmlevel
   erfolgt.

Es soll ferner möglich sein, dass die Konfigurierungsmittel mit einer geregelten Strom-/Spannungs-Versorgungsquelle für den PFC gekoppelt sind und - in Abhängigkeit von dem eingestellten Betriebsmodus - eine Umschaltung zwischen einer Spannungsregelung, einer Stromregelung oder einer gemischten Regelung bewirken.

Ausführungsbeispiele der Erfindung werden nachfolgend anhand der Zeichnungen beschrieben.

Es zeigen:
- Fig. 1: einen Boost-Konverter nach dem Stand der Technik;
- Fig. 2: einen Buck-Konverter nach dem Stand der Technik;
- Fig. 3: ein konfigurierbares PFC,
- Fig. 4: ein EVG gemäss der Erfindung mit einem konfigurierbaren PFC, und
- Fig. 5: ein EVG mit konfigurierbarer PFC, bei der an einem Signalabgriff eine kombinierte Messung erfolgt.

Der in Fig. 1 gezeigte Boost-Konverter weist auf eine Induktivität L, einer Gleichrichterdiode D1, einem Schalter S1 und einem Glättungskondensator C. Wenn am Eingang des Boost-Konverters eine Wechselspannung angelegt wird, so entsteht am Ausgang eine pulsierende Gleichspannung, die je nach Bemessung des Kondensators C mehr oder weniger geglättet ist. Um die Stromaufnahme des' Boost-Konverters möglichst sinusförmig zu gestalten, kann der Schalter S1 entsprechend getaktet werden. Bei einer nahezu sinusförmigen Stromaufnahme ist die Rückstrahlung von Oberwellen in das Netz gering. Der Spitzenwert der Gleichspannung am Ausgang ist höher als die Amplitude der am Eingang liegenden Wechselspannung. Der Boot-Konverter wird daher auch als Hochsetzsteller bezeichnet.

Der in Fig. 2 gezeigte Buck-Konverter weist die gleichen Elementen wie der Boost-Konverter auf, jedoch sind diese anders angeordnet. Es sind dies ein Schalter S2, eine Gleichrichterdiode D2, eine Induktivität L und ein Glättungskondensator C. Wenn am Eingang eine Wechselspannung anliegt, so wird diese auch bei dem Buck-Konverter gleichgerichtet. Am Ausgang des Back-Konverters tritt ebenfalls eine pulsierende Gleichspannung auf, die je nach Bemessung des Glättungskondensators C mehr oder weniger gut geglättet ist. Der Spitzenwert der Gleichspannung am Ausgang ist bei dem Buck-Konverter geringer, als die der Amplitude der am Eingang anliegenden Wechselspannung. Durch geeignetes Takten des Schalters S2 gelingt es auch bei dem Buck-Konverter, den Eingangsstrom weitgehend sinusförmig zu gestalten, mit dem Ergebnis, dass die Rückstrahlung an Oberwellen in das Netz relativ gering ist.

Konverter der in den Fig. 1 und 2 beschriebenen Art werden wegen der beschriebenen Eigenschaften häufig nicht-linearen Netzwerken vorgeschaltet, um die Normen zur Begrenzung von Oberwellen-Rückstrahlungen erfüllen zu können. Das gilt auch und insbesondere für elektronische Vorschaltgeräte für Leuchtmittel. Unterschiedliche Leuchtmittel haben dabei einen entsprechend unterschiedlichen Spannungsbedarf. So benötigten beispielsweise Leuchtstofflampen für das Zünden und den Betrieb eine hochfrequente Spannung, während Halogenlampen, insbesondere Niedervolthalogenlampen mit einer weit unter 1000 Volt liegenden Wechselspannung auskommen. Anordnungen von Leuchtdioden benötigten Spannungen, die unter 100 Volt liegen und eine einzelne Leuchtdiode benötigt sogar nur wenige Volt.

Im Hinblick darauf, dass Konverter der in den Fig. 1 und 2 gezeigten Art als Vorschaltfilter für nicht-lineare Netzwerke zum Zwecke der Oberwellenreduzierung Anwendung finden, werden diese Konverter als auch Leistungsfaktor-Korrekturschaltung oder englisch Power Factor Controller oder abgekürzt PFC bezeichnet.

In Fig. 3 ist ein konfigurierbares PFC 1 gezeigt, das praktisch aus einem Buck-Konverter und einem Boost-Konverter besteht, die hintereinander geschaltet sind. Das PFC ist so konfigurierbar, dass es entweder nur als Buck-Konverter mit erniedrigter Ausgangsspannung oder nur als Boost-Konverter mit erhöhter Ausgangsspannung arbeitet. Um das zu gewährleisten, ist mit der Gleichrichterdiode D2 des Buck-Konverters ein Schalter S3 in Serie geschaltet, und mit der Gleichrichterdiode D1 des Boost-Konverters ist ein Schalter S4 parallel geschaltet. Ferner ist der konfigurierbare PFC 1 mit Konfigurierungsmitteln 2 verstehen, welche das Takten der Schalter S1 und S2 übernehmen und die Schalter S3 und S4 ein- bzw. ausschalten. Den Korifigurierungsmitteln 2 wird dazu ein entsprechendes Stellsignal zugeführt. Wenn der PFC nur als Boost-Konverter arbeiten soll, so werden die Schalter S3 und S4 - wie dargestellt - geöffnet. Wenn der PFC 1 dagegen ausschließlich als Buck-Konverter arbeiten soll, so werden die Schalter S3 und S4 geschlossen.

Die Schalter S3 und S4 sind nicht zwingend notwendig. Der konfigurierbare PFC 1 funktioniert auch, wenn der Schalter S3 dauerhaft geschlossen oder nicht vorhanden (überbrückt) ist und/oder wenn der Schalter S4 dauerhaft geöffnet oder weggelassen ist. Er dient nur zur Verringerung der Schaltverluste.

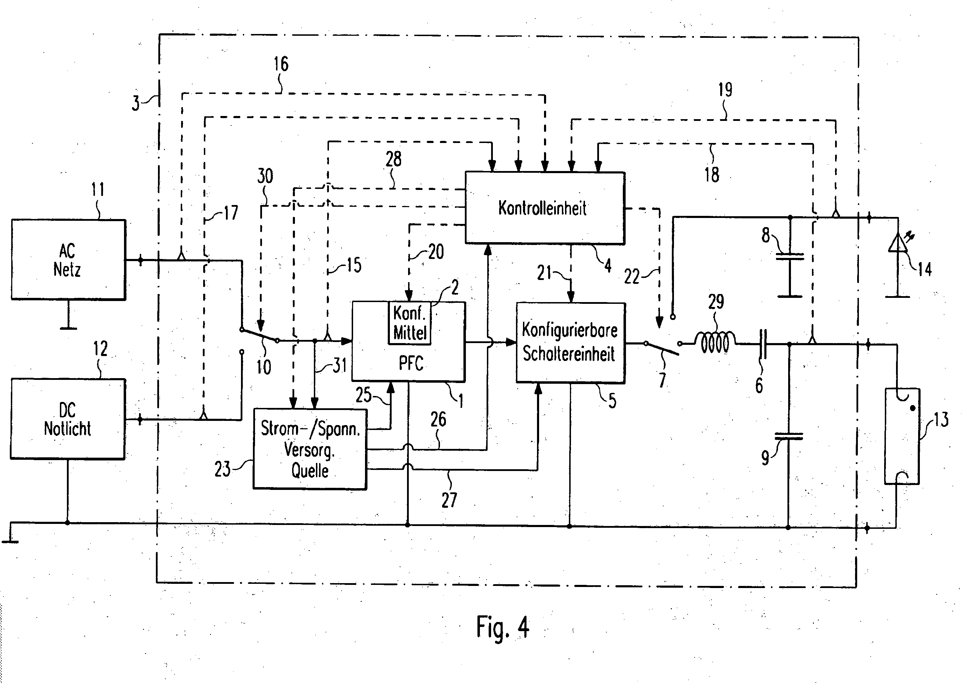

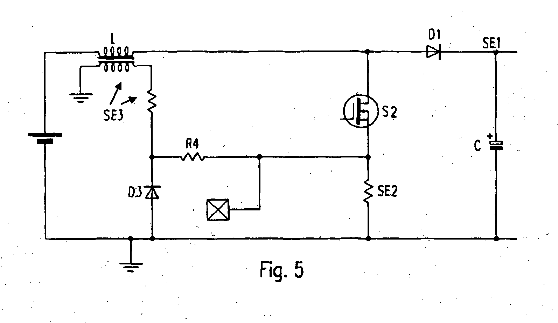

Der PFC 1 kann wahlweise im Betrieb mit kontinuierlichem Strom ("continuous conduction mode"), im Betrieb mit diskontinuierlichem Strom ("discontinuous conduction mode") oder im Betrieb im Grenzbereich zwischen kontinuierlichem und diskontinuierlichem Strom ("critical conduction mode" oder Borderline-Betrieb) arbeiten. Für die nachfolgende Beschreibung wird der Einfachheit halber unmittelbar Bezug genommen auf die eingangs erwähnte Veröffentlichung von Rossetto, Spiazzi und Tenti. In dieser Veröffentlichung sind den kontinuierlichen Betrieb repräsentierende Schaltungen in Figur 2 (peak current control), Figur 3 (average current control) und Figur 4 (hysteresis control) dargestellt. Eine den Betrieb im Grenzbereich (borderline control) repräsentierende Schaltung ist in Figur 5 (borderline control) dargestellt. Und der diskontinuierliche Betrieb ist in Figur 6 (discontinuous current PWM control) gezeigt.

Die nachfolgende Beschreibung betrifft weiterhin die Figur 3 der vorliegenden Anmeldung.

Für den Betrieb mit kontinuierlichem Stromfluss werden den Konfigurierungsmitteln 2 von einem Drosselstrom-Sensor SE2 Informationen über den durch den Schalter S2 fließenden Drosselstrom sowie vom Meßpunkt SE1 Informationen über die Ausgangsspannung zugeführt. Die Konfigurierungsmittel 2 enthalten ferner einen nicht dargestellten Sinus-Referenzgenerator. Der Eingangsstrom hat Sinusform, die durch Sägezähne approximiert ist. Alternativ kann das Sinus-Referenzsignal auch über einen Messpunkt SE5 abgegriffen werden. Abhängig von der Höhe der Ausgangsspannung am Meßpunkt SE1 und abhängig von der Amplitude des Sinus-Referenzsignales wird als Regelparameter der maximal zulässige Strom durch den Schalter S2 festgelegt. Dieser Strom wird durch den Drosselstrom-Sensor SE2 überwacht. Sobald der Strom durch den Drosselstrom-Sensor SE2 seinen maximal zulässigen Wert erreicht hat, wird der Schalter geöffnet. Während des Betriebes mit kontinuierlichem Strom kann der PFC mit einer fixen Frequenz arbeiten. Abhängig von dem Ausschaltzeitpunkt, gegeben durch das Erreichen der Ausschaltbedingung am Drosselstrom-Sensor SE2, ergibt sich aufgrund der vorgegebenen Periodendauer die Ausschaltzeit. Nachdem die vorgegebene Periodendauer abgelaufen ist, wird der Schalter S2 wieder eingeschaltet.

Damit der PFC 1 wahlweise auch im Betrieb mit diskontinuierlichem Strom arbeiten kann genügt es, wenn den Konfigurierungsmitteln 2 Informationen über die Ausgangsspannung vom Meßpunkt SE1 zugeführt werden. Die Konfigurierungsmittel enthalten weiterhin einen nicht dargestellten Pulsweitenmodulator sowie einen ebenfalls nicht dargestellten Spannungsabweichungs-Komparator, der das vom Meßpunkt SE1 abgenommene Meßsignal der Ausgangsspannung des PFCs 1 mit einer Referenzspannung vergleicht und das Vergleichsergebnis dem einen Eingang des Pulsweitenmodulators zuführt. Dem anderen Eingang des PFCs 1 wird ein Sägezahn zugeführt. Mit dem Ausgangssignal des Pulsweitenmodulators wird der Schalter S2 getaktet. Der Eingangsstrom des PFCs 1 besteht in diesem Fall aus diskontinuierlichen Sägezähnen, die von Null ausgehen, wobei die Einhüllende ihrer Amplitude eine Sinusform nachbildet.

Für den Betrieb im Grenzbereich zwischen kontinuierlichem und diskontinuierlichem Strom werden den Konfigurierungsmitteln 2 von der Meßwindung SE3 an der Drossel L Informationen über den Nulldurchgang des Drosselstroms und von dem Meßpunkt SE1 wieder Informationen über die Ausgangsspannung des PFCs1 zugeführt. Die Konfigurierungsmittel 2 enthalten dafür zusätzlich die folgenden nicht dargestellten Schaltungsteile:
Einen Stromkomparator, dem das Meßsignal des Drosselstromsensors SE2 und das Ausgangssignal eines Multiplizierers zugeführt wird, einen Stromabweichungsdetektor, dem das an der Meßwindung SE3 detektierte Drosselstrom-Nulldurchgangssignal zugeführt wird, ein UND-Gatter, das den Schalter S3 taktet und dem dessen Eingängen das Ausgangssignal des Stromkomparators und das Ausgangssignal des Stromabweichungsdetektors zugeführt wird. Den Eingängen des Multiplizierers wird das Ausgangssignal des Sinus-Referenzgenerators und das Ausgangssignal des Spannungsabweichungskomparators zugeführt. Der Eingangsstrom besteht in diesem Fall aus sich quasi kontinuierlich aneinanderreihenden Sägezähnen, die von Null ausgehen, wobei die Einhüllende ihrer Amplituden eine Sinusform approximiert.

Beispielweise kann das Konfigurationsmittel 2 als Steuer- und/oder Regeleinheit, wie beispielsweise als Integrierte Schaltung, ASIC, etc. ausgebildet sein. Die Steuer- und/oder Regeleinheit kann dabei beispielsweise als digitale Einheit ausgeführt sein. Die digitale Implementierung bietet den Vorteil, dass in der Steuer- und/oder Regeleinheit abhängig vom gewählten Betriebsart die erforderlichen Referenzen umgeschaltet werden können. Beispielweise kann eine Liste von Referenzwerten in einer Tabelle abgelegt sein. Die Erfassung der Messwerte der Messpunkte SE1 bis. SE5 kann jeweils einem Anschluss des Konfigurationsmittels 2 zugeführt werden. Das Konfigurationsmittel 2 kann die Messwerte durch einen oder mehrere Analog-Digital-Konverter erfassen.

Die an den Messpunkten SE1 bis SE5 erfassen Messwerte können dem Konfigurationsmittel 2 auch über einen oder mehrere gemeinsame Anschlüsse zugeführt werden. Die Messpunkte können durch Koppelglieder miteinander verbunden sein und abhängig vom Zeitpunkt der Messung kann der Messwert unter Rücksichtnahme auf den aktuellen Betriebszustand bewertet werden. Ein solches Koppelglied kann beispielweise eine Diode oder auch ein hochohmiger Widerstand sein. Wenn beispielsweise der Schalter S2 geöffnet ist, kann davon ausgegangen werden, dass kein Strom durch den Drosselstromsensor SE2 fließt. Abhängig von der Information über den aktuellen Zeitpunkt und den Zustand der Schaltung kann eine oder mehrere Referenzen an den Schaltzustand angepasst werden. Die Anpassung kann sowohl den aktuellen Schaltzustand als auch die gewählte Betriebsart berücksichtigen. Dadurch kann ein Anschluß zum Erfassen von Messwerten auch für die Kopplung von zwei Messpunkten, die jeweils nur in einer bestimmten Betriebsart genutzt werden, genutzt werden. Beispielweise kann der Drosselstrom-Sensor SE2, welcher im Betrieb mit kontinuierlichem Strom genutzt wird, mit der Meßwindung SE3 an der Drossel L , welcher im Betrieb im Grenzbereich zwischen kontinuierlichem und diskontinuierlichem Strom genutzt wird, kombiniert werden.

Durch Anordnung eines entsprechenden Koppelgliedes können die beiden Messungen an einem Anschluss kombiniert werden. Ein Beispiel dafür ist in Fig. 5 dargestellt.

Im Betrieb im Grenzbereich zwischen kontinuierlichem und diskontinuierlichem Strom kann der Sprung im Messwert aufgrund der erfolgten Entmagnetisierung der Drossel L erkannt werden. Durch die Platzierung der Diode D3 als Koppelglied kann während der Schalter S2 geschlossen ist keine Spannung am Messpfad der Meßwindung SE3 anliegen, da die Spannung über der Sekundärwicklung der Drossel L negativ ist und somit die Diode D3 sperrt.

Dadurch kann im Betrieb mit kontinuierlichem Strom abhängig von der Information, ob der Schalter S2 geöffnet oder geschlossen ist, der Messwert als Amplitude am Drosselstrom-Sensor SE2 bewertet werden.

Fig. 4 zeigt ein elektronisches Vorschaltgerät 3 für Leuchtmittel, das durch Verwendung eines PFC 1, wie er in Zusammenhang mit Fig. 1 beschrieben wurde, konfigurierbar ist. Der PFC 1 enthält wiederum Konfigurierungsmittel 2, deren Funktion und Wirkung in Zusammenhang mit Fig. 3 erläutert wurde. Das konfigurierbare EVG 3 enthält weiterhin eine Kontrolleinheit 4 und eine konfigurierbare Schaltereinheit 5.

Der Eingang des konfigurierbaren EVGs 3 kann durch entsprechendes Umschalten eines Schalters 10 wahlweise mit dem Wechselspannungsnetz AC Netz 11 oder mit einer Gleichspannungs-Notlichtversorgungsquelle DC Notlicht 12 verbunden werden. Der Ausgang des konfigurierbaren EVGs 3 kann mittels eines Umschalters 7 wahlweise auf einen Hauptausgangskreis oder einem Notlicht-Ausgangskreis umgeschaltet werden. Der Hauptausgangskreis weist eine Induktivität 29, einen Resonanzkondensator 9 und einen Koppelkondensator 6 auf. Zu dem Resonanzkondensator 9 ist eine Leuchtstofflampe 13 parallel geschaltet. Der Notlicht-Ausgangskreis enthält eine Leuchtdiode 14, die zu einem Glättungskondensator 8 parallel geschaltet ist.

Eine selektive Aktivierung der Ausgangskreise durch den Schalter S7 ist nur optional. Es ist auch möglich, die Gasentladungslampe 13 zu deaktivieren (wird nicht gezündet). Wenn die LED 14 betrieben werden soll, so kann diese mit einem Schalter dazu geschaltet werden. Im Falle eines LED-Betriebs kann auch eine vorhandene Heizschaltung für die Gasentladungslampe 13 deaktiviert werden.

Den beiden Ausgangskreisen wird die entsprechende Betriebsspannung von der konfigurierbaren Schalteinheit 5 zugeführt, die zwischen einem Halbbrückenbetrieb, einem Vollbrückenbetrieb und einem Pulsweitenmodulations-Betrieb (PWM Betrieb) umschaltbar, also konfigurierbar ist. Der Halbbrückenbetrieb bzw. der Vollbrückenbetrieb ist für den Hauptausgangskreis mit der Leuchtstofflampe 13 relevant. Der PWM Betrieb ist dagegen für den Notlicht-Ausgangskreis mit der Leuchtdiode 14 relevant.

Die konfigurierbare Schaltereinheit 5 ist ein Wechselrichter, der die von dem PFC 1 gelieferte mehr oder weniger geglättete pulsierende Gleichspannung in eine Wechselspannung konvertiert, deren Frequenz und Spannung durch die Konfiguration des PFCs 1 und der Schaltereinheit in Anpassung an den entsprechenden Ausgangskreis bestimmt werden kann.

Das konfigurierbare EVG 3 enthält weiterhin eine Strom-/Spannungsversorgungsquelle 23, die ihre Eingangsenergie über eine mit dem Eingang des PFC verbundene Leitung 31 erhält, also entweder von AC Netz 11 oder von DC Notlicht 12. Die Versorgungsquelle 23 versorgt über Leitungen 25, 26 und 27 den PFC 1, die Kontrolleinheit 4 und die konfigurierbare Schaltereinheit 5 mit der entsprechenden Betriebsspannung bzw. dem entsprechenden Betriebsstrom.

Die Kontrolleinheit 4 steuert den Schalter 10, den PFC 1, die Strom-/Spannungsversorgungsquelle 23, die konfigurierbare Schaltereinheit 5 und den Schalter 7, wie dies durch die Leitungen 30, 20, 28, 21 und 22 angedeutet ist. Verglichen mit Fig. 3 erhalten die Konfigurierungsmittel 2 des PFC 1 das Stellsignal von der Kontrolleinheit über die Leitung 20.

Die Kontrolleinheit 4 erhält ihrerseits Informationen von den beiden Eingangskreisen, den beiden Ausgangskreisen und dem Eingang des PFC 1, wie dies durch die gestrichelten Linien 16, 17, 18, 19 und 15 angedeutet ist.

Im Normalbetrieb ist AC-Netzspannung 11 über den Umschalter 10 mit dem Eingang des konfigurierbaren PFC 1 verbunden und führt diesem die Netzspannung zu. Die Kontrolleinheit wird darüber durch die in gestrichelten Linien angedeutete Leitung 16 informiert. Sie schaltet dementsprechend über die in gestrichelten Linien angedeutete Leitung 20 den Schalter 7 so, dass die konfigurierbare Schaltereinheit 5 mit dem Hauptausgangskreis verbunden ist. Ferner schaltet die Kontrolleinheit über die in gestrichelten Linien angedeutete Leitung 21 die konfigurierbare Schaltereinheit so, dass diese im Halbbrückenbetrieb arbeitet. Über die in gestrichelten Linien angedeutete Leitung 20 werden' die Konfigurierungsmittel 2 des PFC 1 von der Kontrolleinheit 4 mit einem Stellsignal beaufschlagt, welches dafür sorgt, dass das PFC als Boost-Konverter arbeitet. Der Strom-/Spannungsversorgungsquelle 23 steht über die Leitung 31 Netzspannung zur Verfügung. Die Kontrolleinheit 4 schaltet die Strom-/Spannungsversorgungsquelle 23 über den gestrichelten Linien angedeutete Leitung 28 so, dass der Halbbrücke in der konfigurierbaren Schaltereinheit 5 und dem PFC 1 die passenden Betriebsspannungen bzw. Ströme zugeführt werden.

Wenn nun AC Netz 11 ausfällt, so erfährt die Kontrolleinheit 4 dies über die in gestrichelten Linien angedeutete Leitung 16. Sie veranlasst daraufhin, dass der Schalter 10 den Eingang des PFC 1 an DC Notlicht 12 umschaltet. Außerdem schaltet die Kontrolleinheit 4 den Schalter 7 über den gestrichelten Linien angedeutete Leitung 22 so um, dass nunmehr an den Ausgang der konfigurierbaren Schaltereinheit 5 der Notlicht-Ausgangskreis angeschlossen ist. Über die in den gestrichelten Linien angedeutete Leitung 21 schaltet die Kontrolleinheit 4 die konfigurierbare Schaltereinheit 5 auf PWM Betrieb um. Auch die Versorgungsquelle 23, die nunmehr mit Gleichspannung von DC Notlicht 12 versorgt wird, wird so umgeschaltet, dass die konfigurierbare Schaltereinheit im PMW-Betrieb arbeiten kann. Schließlich schaltet die Kontrolleinheit 4 den PFC 1 über die in gestrichelten Linien angedeutete Leitung 20 so um, dass der PFC 1 nur im Buck-Betrieb arbeitet. Ein Buck-Betrieb ist nicht nur für den LED-Einsatz vorteilhaft, sondern dann, wenn die Gasentladungslampe 13 mit einem sehr niedrigen Dimmpegel gefahren wird.

Es können sowohl die Halbbrücke (z.B. Buck-Betrieb bei LED, Gegentaktbetrieb bei Gasentladungslampe) als auch der PFC (z.B. Boost oder Buck bzw. Betrieb mit kontinuierlichem Strom, diskontinuierlichem Strom oder im Betrieb im Grenzbereich zwischen kontinuierlichem und diskontinuierlichem Strom) ihre Arbeitsweise je nach Art der Last oder auch des Versorgungszustands umstellen.

Die Erkennung der angeschlossenen Last kann beispielsweise durch eine Testmessung (bspw. durch eine Wendelerkennung oder Leistungsmessung) erfolgen oder aber über eine extern zugeführte Information (bspw. mittels Information über eine Schnittstelle).

Weiterhin ist zu bemerken, dass bei Leistungen unter 25W andere Normen für die Harmonischen und die Qualität des gezogenen Netzstroms existieren. Daher ist bei kleiner Last (z.B. niedriger Dimmpegel) ein Verzicht auf die PFC-Funktion möglich und der PFC kann in einer alternativen Betriebsweise (z.B. Buck-Betrieb) betrieben werden.

Ergänzend ist noch zu erwähnen, dass die Strom-/Spannungsversorgungsquelle 23 je nach Betriebsmodus zwischen einer Spannungsregelung, einer Stromregelung, einer Leistungsregelung oder einer gemischten Regelung umgeschaltet werden kann.

Das PFC 1 kann so ausgebildet sein, dass es bei einem Betrieb im Buck-Modus die Begrenzung der Einschaltstrom-Spitze (sog. Inrush-Limitierung) übernimmt. Dazu kann bspw. der Schalter S2 im Fall der Buck-Betriebsart zur Stromunterbrechung kurzzeitig geöffnet werden. Indessen kann die Begrenzung der Einschaltstrom-Spitze bei allen geschilderten Betriebsweisen angewandt werden.

## Patentansprüche

1. Elektronisches Vorschaltgerät (EVG) für ein Leuchtmittel (13, 14),
**dadurch gekennzeichnet,**
**dass** dieses (3) eine Leistungsfaktor-Korrekturschaltung (PFC) (1) mit Konfigurierungsmitteln (2) enthält, die eine Konfiguration des PFC erlauben, derart, dass er wahlweise in Abhängigkeit aktueller Betriebsparameter im
- Betrieb mit kontinuierlichem Strom, oder
- Betrieb mit diskontinuierlichem Strom, oder
- Betrieb im Grenzbereich zwischen kontinuierlichem und diskontinuierlichem Strom
betrieben werden kann.

2. Elektronisches Vorschaltgerät nach Anspruch 1,
**dadurch gekennzeichnet,**
**dass** die Konfigurationsmittel (2) zusätzlich eine Konfiguration des PFC erlauben, derart, dass er wahlweise im
a) Buck-Betrieb, oder
b) Boost-Betrieb
betrieben werden kann.

3. Elektronisches Vorschaltgerät nach Anspruch 1 oder 2, **dadurch gekennzeichnet,**
**dass** die durch die Konfigurationsmittel (2) bewirkte Konfiguration das PFC in Abhängigkeit von
f) der Versorgungsspannung für AC-Betrieb oder DC-Betrieb,
g) der erkannten Last am Ausgang,
h) der Eingangsspannung, und/oder
i) dem Dimmlevel
erfolgt.

4. Elektronisches Vorschaltgerät nach einem der Ansprüche 1 bis 3,
**dadurch gekennzeichnet,**
**dass** die Konfigurierungsmittel (2) mit einer geregelten Strom-/Spannungs-Versorgungsquelle (23) für den PFC (1) gekoppelt sind und - in Abhängigkeit von dem eingestellten Betriebsmodus - eine Umschaltung zwischen einer Spannungsregelung, einer Stromregelung, einer Leistungsregelung oder einer gemischten Regelung bewirken.

5. Elektronisches Vorschaltgerät nach einem der Ansprüche 1 bis 4,
**dadurch gekennzeichnet,**
**dass** der PFC (1) so ausgebildet ist, dass bei einem Betrieb im Buck-Modus die Begrenzung der Einschaltstrom-Spitze übernimmt.

6. Elektronisches Vorschaltgerät nach einem der Ansprüche 1 bis 5,
**dadurch gekennzeichnet,**
**dass** der PFC (1) Steuermittel zur Begrenzung der Einachaltstrom-Spitze aufweist, die bei eingeschalteter Netzversorgungsspannung den Buck-Schalter (S2) zunächst öffnen und dann taktweise schließen, öffnen u.s.w.

7. Elektronisches Vorschaltgerät (EVG) für ein Leuchtmittel (13, 14) mit einer getakteten Schaltereinheit (5), nach einem der Ansprüche 7-12,
**dadurch gekennzeichnet,**
**dass** die Schaltereinheit (5) konfigurierbar ist, derart, dass sie im
j) Halbbrückenbetrieb oder im
k) Vollbrückenbetrieb oder im
l) Pulsweitenmodulations-Betrieb
betrieben werden kann.

8. Elektronisches Vorschaltgerät nach einem der vorhergehenden Ansprüche,
**gekennzeichnet durch**,
eine Kontrolleinheit (4), die die eingesetzten Leuchtmittel (13, 14) identifiziert und den Konfigurationsmitteln (2) des PFC (1) bzw. der konfigurierbaren Schaltereinheit (5) eine Stellinformation für die Konfiguration zuführt.

9. Elektronisches Vorschaltgerät nach einem der Ansprüche 7 oder 8,
**dadurch gekennzeichnet,**
**dass** die konfigurierbare Schaltereinheit (5) mit einer geregelten Strom-/Spannungsversorgungsqüelle (23) für das EVG (3) gekoppelt ist und - in Abhängigkeit von dem eingestellten Betriebsmodus - eine Umschaltung zwischen einer Spannungsregelung, einer Stromregelung, einer Leistungsregelung oder einer gemischten Regelung bewirkt.

10. Elektronisches Vorschaltgerät nach einem der vorhergehenden Ansprüche,
**dadurch gekennzeichnet,**
**dass** - bei Betrieb des EVG (3) mit einer LED (14) und einem im Buck-Betrieb arbeitenden PFC (1) - der PFC (1) eine Amplituden-Steuerung/-Regelung für die dem Lastkreis zugeführte Spannung übernimmt, und dass zusätzlich die für den Halbbrückenbetrieb konfigurierte Schaltereinheit (5) eine Frequenz-Steuerung/-Regelung der dem Lastkreis zugeführten Spannung übernimmt.

11. Elektronisches Vorschaltgerät nach einem der vorhergehenden Ansprüche,
**dadurch gekennzeichnet,**
**dass** als Leuchtmittel (13, 14) mindestens eine Leuchtstofflampe, mindestens eine Hoch- oder Niederdruck-Halogen-Lampe, mindestens eine Leuchtdiode (LED) oder eine Anordnung von Leuchtdioden verwendet ist.

12. Elektronisches Vorschaltgerät nach Anspruch 7,
**dadurch gekennzeichnet,**
**dass** die konfigurierbares Schaltereinheit (5) eine Halbbrückenschaltung, eine Vollbrückenschaltung, oder eine pulsweitenmodulierte Schaltereinheit ist.

## Claims

1. An electronic ballast (EB) for a luminaire (13, 14)
**characterized in that**
this EB (3) comprises a power factor correction circuit (PFC) (1) with configuration means (2) allowing configuration of the PFC, so that it may be selectively operated as a function of the actual operating parameters when
- operating with a continuous current, or
- operating with a discontinuous current, or
- operating in the border region between continuous and discontinuous current.

2. Electronic ballast according to claim 1,
**characterized in that**
the configuration means (2) also allow configuration of the PFC, so that it may be selectively operated in
a) buck operation, or
b) boost operation.

3. Electronic ballast according to claim 1 or 2,
**characterized in that**
by the configuration effected by the configuration means (2) the PFC depends on
f) the supply voltage for AC operation or DC operation,
g) the detected load at the output,
h) the input voltage, and/or
i) the dimming level.

4. Electronic ballast according to one of the claims 1 to 3,
**characterized in that**
the configuration means (2) are coupled with a regulated current/voltage supply source (23) for the PFC (1), and - depending on the set operating mode - effects a switchover between a voltage regulator, a current regulator, a power regulator, or a mixed regulation.

5. Electronic ballast according to one of the claims, 1 to 4,
**characterized in that**
the PFC (1) is so designed that it takes over the inrushcurrent-peak limitation when operating in buck mode.

6. Electronic ballast according to one of the claims 1 to 5,
**characterized in that**
the PFC (1) comprises control means to limit the inrushcurrent-peak, which initially opens the buck switch (S2) and then intermittently closes, opens etc. it, when the power supply voltage is switched on.

7. Electronic ballast (EB) for a luminaire (13, 14) with a clocked switch unit (5), according to any one of the claims 7-12,
**characterized in that**
the switch unit (5) is so configurable that it may be operated in
j) half-bridge mode, or
k) full-bridge mode, or
l) pulse-width modulation operation.

8. Electronic ballast according to one of the preceding claims,
**characterized in that**
a control unit (4) identifies the luminaire (13, 14) used, and supplies control information to the configuration means (2) of the PFC (1) or the configurable switch unit (5) for the configuration.

9. Electronic ballast according to one of the claims 7 or 8,
**characterized in that**
the configurable switch unit (5) is coupled with a controlled current/voltage supply source (23) for the electronic ballast (3) in order to effect a switchover between a voltage regulator, a current regulator, a power regulator, or mixed regulation, as a function of the selected operating mode.

10. Electronic ballast according to one of the preceding claims,
**characterized in that**
upon operation of the EB (3) with an LED (14) and a PFC (1) working in buck mode, the PFC (1) assumes amplitude control/regulation of the voltage supplied to the load circuit, while, in addition, the switch unit (5) configured for half-bridge operation assumes frequency control/regulation of the voltage supplied to the load circuit.

11. Electronic ballast according to one of the preceding claims,
**characterized in that**
at least a fluorescent lamp, at least a high or low pressure halogen lamp, at least a light emitting diode (LED) or an arrangement of light emitting diodes, is used as the luminaire (13, 14),

12. Electronic ballast according to claim 7,
**characterized in that**
the configurable switch unit (5) is a half-bridge circuit, a full-bridge circuit, or a pulse-width modulated switch unit.

## Revendications

1. Ballast électronique (BE) pour un moyen d'éclairage (13, 14),
**caractérisé en ce que**
ce ballast (3) contient un circuit à correction de facteur de puissance (FPC)(1) avec des moyens de configuration (2) qui permettent une configuration du PFC de telle sorte qu'il peut au choix être mis en marche en fonction de paramètres de fonctionnement actuels
- dans le mode avec courant en continu, ou
- dans le mode avec courant discontinu, ou
- dans le mode dans la zone limite entre le courant en continu et le courant discontinu.

2. Ballast électronique selon la revendication 1,
**caractérisé en ce que**
les moyens de configuration (2) permettent en plus une configuration du PFC de telle sorte qu'il peut au choix être mis en marche
a) dans le mode buck, ou
b) dans le mode boost.

3. Ballast électronique selon la revendication 1 ou 2,
**caractérisé en ce que**
la configuration du PFC mise en oeuvre par les moyens de configuration (2) s'effectue en fonction
f) de la tension d'alimentation pour le mode CA ou le mode CC,
g) de la charge identifiée à la sortie,
h) de la tension d'entrée, et/ou
i) du niveau de gradation.

4. Ballast électronique selon l'une des revendications 1 à 3,
**caractérisé en ce que**
les moyens de configuration (2) sont couplés à une source d'alimentation courant/tension (23) pour le PFC (1) et - en fonction du mode de fonctionnement réglé - mettent en oeuvre une commutation entre une régulation de tension, une régulation de courant, une régulation de puissance ou une régulation mixte.

5. Ballast électronique selon l'une des revendications 1 à 4,
**caractérisé en ce que**
le PFC est constitué de telle sorte que, lors d'un fonctionnement dans le mode buck, il prend en charge la limitation de la pointe de courant d'appel.

6. Ballast électronique selon l'une des revendications 1 à 5,
**caractérisé en ce que**
le PFC (1) présente des moyens de commande pour la limitation de la pointe de courant d'appel qui, lorsque la tension d'alimentation du secteur est mise en circuit, commencent par ouvrir le commutateur Buck (S2) et puis le ferment de façon cadencée, l'ouvrent, et ainsi de suite.

7. Ballast électronique (BE) pour un moyen d'éclairage (13, 14) avec une unité de commutateur (5) cadencée selon l'une des revendications 7 à 12,
**caractérisé en ce que**
l'unité de commutateur (5) cadencée peut être configurée de telle sorte qu'elle peut être mise en fonction
j) dans le mode demi-pont ou
k) dans le mode pont complet
1) dans le mode à modulation de largeur d'impulsions.

8. Ballast électronique selon l'une des revendications précédentes,
**caractérisé par**
une unité de contrôle (4) qui identifie les moyens d'éclairage (13, 14) utilisés et conduit une information de réglage pour la configuration aux moyens de configuration (2) du PFC (1) ou respectivement de l'unité de commutateur (5) configurable.

9. Ballast électronique selon l'une des revendications 7 ou 8,
**caractérisé en ce que**
l'unité de commutateur (5) configurable est couplée à une source d'alimentation courant/tension (23) régulée pour le BE (3) et - en fonction du mode de fonctionnement réglé - met en oeuvre une commutation entre une régulation de tension, une régulation de courant, une régulation de puissance ou une régulation mixte.

10. Ballast électronique selon l'une des revendications précédentes,
**caractérisé en ce que**
- lors du fonctionnement du BE (3) avec une LED (14) et un PFC (1) fonctionnant dans le mode buck - le PFC (1) prend en charge une commande/régulation d'amplitude pour la tension acheminée au circuit de charge, et **en ce que**, en plus, l'unité de commutateur (5) configurée pour le mode en demi-pont prend en charge une commande/régulation de fréquence de la tension acheminée au circuit de charge.

11. Ballast électronique selon l'une des revendications précédentes,
**caractérisé en ce que**,
en tant que moyen d'éclairage (13, 14), il est utilisé au moins une lampe fluorescente, au moins une lampe halogène haute ou basse pression, au moins une diode électroluminescente (LED) ou un agencement de diodes électroluminescentes.

12. Ballast électronique selon la revendication 7,
**caractérisé en ce que**
l'unité de commutateur (5) configurable est un circuit en demi-pont, un circuit en pont complet ou une unité de commutateur modulée en largeur d'impulsions.
